# EUROPEAN PATENT SPECIFICATION

(11) **EP 3 293 062 B1**
(45) Date of publication and mention of the grant of the patent: **15.05.2019**
(21) Application number: 17184301.4
(22) Date of filing: 01.08.2017
(51) Int. Cl.: B60S 9/08, B66F 17/00

(54) **SUPPORT FOOT**
STÜTZFUSS
PIED DE SUPPORT

(30) Priority: 13.09.2016 IT 201600092134
(43) Date of publication of application: 14.03.2018
(73) Proprietor: Simol S.P.A., 42045 Luzzara (Reggio Emilia) (IT)
(72) Inventor: RIGHETTI, Valter, 46027 SAN BENEDETTO PO (MN) (IT)
(74) Representative: Corradini, Corrado

(56) References cited:
- US-A- 3 890 890
- US-A1- 2009 138 126
- US-A1- 2009 272 952

## Description

### TECHNICAL FIELD

The present invention refers to a support foot for structures and/or machinery.

In particular the invention refers to an extensible support foot.

### PRIOR ART

Extensible support feet are generally used to lift and/or level structures or machinery like for example trailers, farming machines or industrial vehicles, in order to allow them to be rested stably on the ground.

Such support feet usually comprise a first tube with which a second tube is slidingly associated, said second tube being external and concentric with respect to the first, where the first tube rests on the ground through a base or a wheel, whereas the second tube is usually fixed to the object to be supported. Inside the tubes a mechanism is installed that allows the extension of the support foot to be adjusted. Usually, such a mechanism consists of a screw associated with the second body that engages with a nut screw associated with the first body.

A known problem of these support feet is the fact that it is impossible to know the actual value of the weight that the vehicle or the structure or machinery discharges onto the support foot, since this can have repercussions in terms of safety if the object to be supported has a weight that can compromise the structural strength of the support foot.

The patent application US2009/572952 describes an extensible support foot comprising a load indicator.

Even without problems of structural strength, the possibility of knowing the size of the weight that bears down on the support foot can be a useful function in many fields.

One field of application, in which such a need is felt, is that of waste compactors; such machines, as their name suggests, are designed to compress waste so that it occupies the least possible space.

Compactors generally consist of a loading area inside which a press compresses waste to decrease the volume thereof.

The measurement of the amount of waste present inside the loading area is a necessary piece of information to establish when emptying should be carried out and it is carried out indirectly through the measurement of the force required by the press to move it forwards. When such a force exceeds a predetermined threshold value, it means that the loading area is full and must be emptied.

A known problem of such measurement consists of the fact that, in the case of objects that are particularly hard or positioned in an anomalous manner, the force that the press must apply can be more than the threshold value, with the consequence that the control system warns the operator that the loading area must be emptied when in reality it is not necessary.

A purpose of the present invention is to overcome the aforementioned drawbacks of the prior art, in a simple, rational and low-cost solution.

Such purposes are accomplished by the characteristics of the invention outlined in the independent claim. The dependent claims outline preferred and/or particularly advantageous aspects of the invention.

### DESCRIPTION OF THE INVENTION

The invention, in particular, provides an extensible support foot for structures and/or machinery, comprising: a first body equipped with a support base on the ground, a second body slidingly associated with the first body and movable along a predetermined longitudinal direction towards and away from the support base, means for adjusting the distance between the second body and the support base, and a weighing device adapted for measuring a force acting on the second body in said longitudinal direction.

Thanks to such a solution, an extensible support foot is provided that is capable of measuring the weight of the object bearing down on it.

According to another aspect of the invention, the weighing device comprises a resilient element (for example a spring) arranged between the first and the second body.

In this way, the weighing device is capable of determining the weight that bears down on the support foot by simply evaluating the deformation of the resilient element.

According to a further aspect of the invention the resilient element is contained inside a cavity of the second body.

In this way it is possible to protect the resilient element of the weighing device from foreign bodies and atmospheric agents, ensuring the optimal operation thereof over time and reduced wear.

According to another aspect of the invention, the resilient element is a helical compression spring.

Thanks to such a solution a simple and cost-effective weighing device is provided.

According to the invention, the adjustment means comprise a screw rotatably associated with the second body and configured to be screwed or unscrewed with respect to a nut screw associated with the first body.

In this way, solid, cost-effective and precise adjustment means are provided. According to another aspect of the invention the screw is movable with respect to the second body along said longitudinal direction.

In this way, the adjustment means can allow the movements of the resilient element.

According to a further aspect of the invention, the resilient element is arranged between said screw and the second body.

In this way, the adjustment means can aid the movements of the resilient element.

According to the invention, the support foot comprises a device for displaying the measurement carried out by the weighing device.

Thanks to such a solution it is possible to know the measurement of the weight bearing down on the support foot.

According to the invention, the display device comprises a reference element associated with the screw and a window formed in the second body to allow the reference element to be viewed from the outside.

In this way, a practical and cost-effective system for displaying the value of the weight bearing down on the support foot is provided.

According to another aspect of the invention, the reference element comprises a washer arranged between the resilient element and the screw.

In this way, the number of components of the support foot is reduced given that the function of reference element is given to a structural component.

The invention also provides a waste compactor comprising: a loading area, an opening for the insertion of waste inside the loading area, and a press adapted to compress the waste inside the loading area, said compactor being characterised in that it comprises one or more support feet according to any one of the previous claims.

Thanks to such a solution it is possible to carry out a direct measurement of the amount of waste present inside the compactor in order to establish when it is full and needs to be emptied.

### BRIEF DESCRIPTION OF THE DRAWINGS

Further characteristics and advantages of the invention will become clearer from reading the following description provided as a non-limiting example, with the help of the figures illustrated in the attached tables.

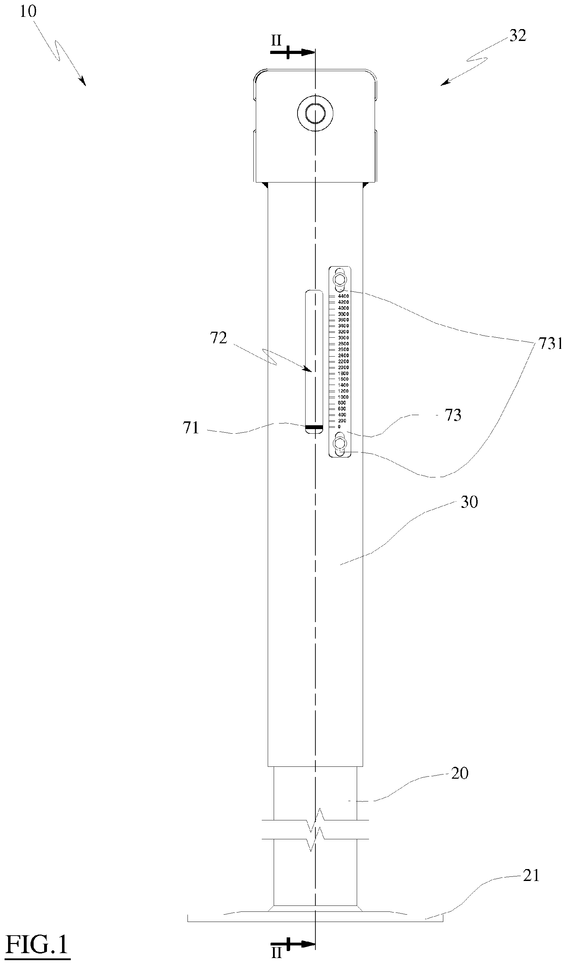

Figure 1 is a side view of the support foot according to the invention.

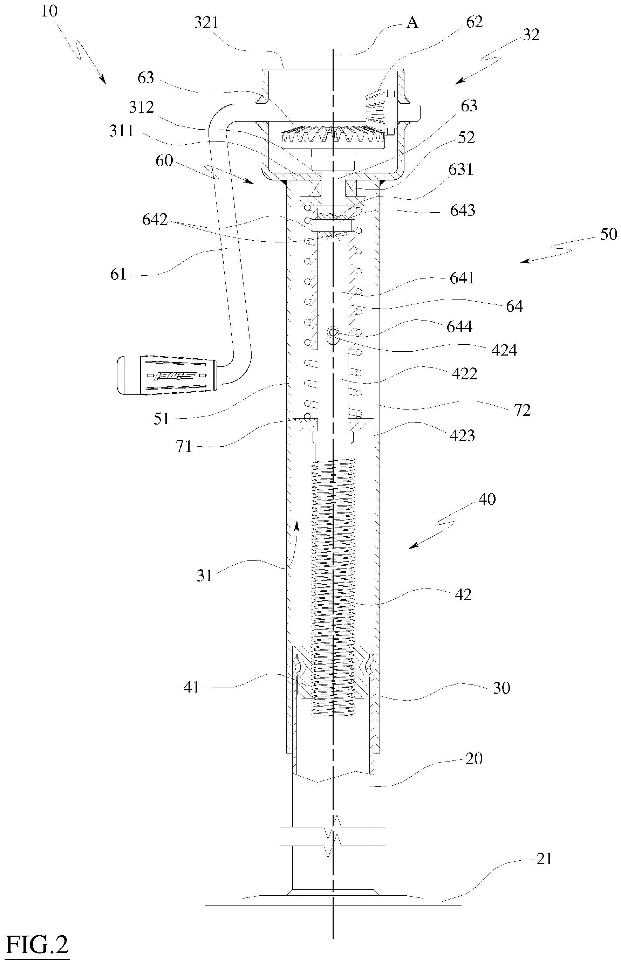

Figure 2 is a section view of the support foot of figure 1 with respect to the section plane II-II.

### BEST EMBODIMENT OF THE INVENTION

With particular reference to such figures, a support foot for supporting and/or levelling structures, vehicles and machinery has been globally indicated with 10.

The support foot 10 comprises a first body 20, for example a substantially rectilinear body having a cylindrical cross section, which is equipped with a support base 21 associated with an end of said first body 20.

In alternative embodiments the first body 20 can consist of a substantially rectilinear body having a cross section that is square or any other shape suitable for the purpose.

The base 21 can for example consist of a flat circular plate having an outer diameter that is greater than the outer diameter of the first body 20, lying on a plane substantially perpendicular to the longitudinal axis A of the first body 20.

In this way, it is possible to increase the contact surface of the support foot, thus improving the stability thereof.

This does not rule out the possibility that in another embodiment the base 21 can consist of an element having the same width or narrower, in the radial direction, than the first body 20, or a wheel or any other device suitable for the purpose.

The support foot 10 also comprises a second body 30, coaxial to the first body 20 and slidingly associated with respect to it along the direction defined by the longitudinal axis A; in particular the second body 30 is movable with respect to the first body 20 between a first position, in which the distance between the second body 30 and the base 21 is minimum, and a second position, in which the distance between the second body 30 and the base 21 is maximum.

The second body 30 is fixed to the object that the support foot 1 is made to support through welding and/or through the interposition of at least one connection bracket (not shown in the drawings).

The second body 30 can, for example, consist of a substantially rectilinear body having a cylindrical section, the inner diameter of which is greater than the outer diameter of the first body 20.

It is foreseen that in alternative embodiments the first body 20 consists of a substantially rectilinear body having a cross section that is square or any other shape suitable for the purpose.

The second body 30 comprises a cavity 31 configured to contain at least one portion of the first body 20.

In the embodiment illustrated in the figures, the cavity 31, which is oriented towards the base 21, has a cylindrical cross section having an inner diameter such as to ensure low clearance between the outer surface of the first body 20 and the inner surface of the cavity 31.

In other embodiments, the cavity 31 has a cross section that is square or any other shape suitable for receiving the outer surface of the first body 20 with low clearance.

In this way it is possible to make the sliding of the second body 30 stable and to minimise the entry of foreign bodies into the cavity 31 of the second body 30; it is also possible to arrange a gasket interposed between the cavity 31 and the first body 20 to further reduce the possibility of entry of foreign bodies.

The second body 30 also comprises a U-shaped flange 32, which is fixed, through welding, to the end of the second body 30 opposite the one proximal to the base 21 and is oriented with the concavity in the opposite direction with respect to the cavity 31.

The flange 32 is closed on top by a cover 321.

The support foot 10 is also equipped with means 40 for adjusting the distance between the second body 30 and the base 21, which are configured to move the second body between the first position and the second position, and to arrange it in any intermediate position comprised between said two extreme positions.

Said adjustment means 40 comprise a nut screw 41 and a screw 42 adapted for being coupled with the nut screw 41.

The nut screw 41 is associated with the first body 20 and has a longitudinal axis parallel to the longitudinal axis A.

For example, such a nut screw 41 can be formed inside a cylinder housed in the first body 20.

The screw 42 is associated with the second body 30 with two degrees of freedom: a rotational degree of freedom, consisting of the rotation with respect to the longitudinal axis A, and a translational degree of freedom, consisting of the translation along the direction identified by the longitudinal axis A.

The screw 42 comprises a threaded portion 421, a non-threaded rectilinear shank 422 and a shoulder 423 shaped like a disc arranged between the threaded portion 421 and the shank 422.

In an alternative embodiment the adjustment means 40 can consist of a pneumatic, hydraulic or oil-hydraulic actuation.

The support foot 10 is equipped with a weighing device 50 adapted for measuring a force acting on the second body 30 in the direction of the longitudinal axis A.

Such a force mainly consists of the weight force generated by the object that the support foot 10 must support.

The weighing device 50 comprises a resilient element 51, which is rotatably associated with the second body 30, is housed in the cavity 31 of the second body 30 and is arranged between the first body 20 and the second body 30. The resilient element 51 is equipped with two ends, one of which is associated with the screw 42, specifically it is associated with the shoulder 423 and rotates as a unit with said screw with respect to the longitudinal axis A; the other end is associated with a bottom wall 311 of the cavity 31.

In the embodiment illustrated in the figures, the resilient element 51 consists of a helical compression spring; however this does not rule out the possibility that in alternative embodiments the resilient element 51 can consist of a pneumatic, hydraulic or oil-hydraulic cylinder.

The weighing device 50 comprises an axial bearing 52 arranged between the bottom wall 311 and the end of the resilient element 51.

In this way, the resilient element 51 is free to rotate as a unit with the screw without undergoing the torsions that would cause the friction generated by its end in contact with the bottom wall 311.

The axial bearing 52 is coupled with a washer 312, which is arranged between the resilient element 51 and the axial bearing 52 so as to increase the support surface available to the resilient element.

The support foot 10 is equipped with actuation means 60 adapted for controlling the adjustment means 40.

The actuation means 60 comprise a crank 61 rotatably associated with the flange 32 and a reducer 62 (or other gear), housed inside the U-shaped flange 32, which takes the motion from the crank 61; however, this does not rule out the possibility that in alternative embodiments the reducer 62 can be actuated through an electric motor.

The reducer 62 comprises a first conical wheel 621 rotating as a unit with the crank 61 with respect to a rotation axis perpendicular to the longitudinal axis A and a second conical wheel 622, rotatably associated with the second body 30 with respect to a rotation axis parallel to the longitudinal axis A, which engages with the first conical wheel 621.

The actuation means 60 comprise a first transmission shaft 63, which rotates as a unit with the second conical wheel 622 and is rotatably associated with the second body 30 with respect to the longitudinal axis A.

The first transmission shaft 63 is inserted in a hole 312 formed in the bottom wall 311 and that has its central axis parallel to the longitudinal axis A.

An end of the first transmission shaft 63 is located between the walls of the flange 32 and is associated with the second conical wheel 622, whereas the other end is contained in the cavity 31 of the second body 30.

The actuation means 60 also comprise a second transmission shaft 64, which is rotatably associated with the second body 20 and is slidably associated with the screw 42, with which it rotates as a unit with respect to the longitudinal axis A.

In this way, a transmission shaft is provided that is capable of transmitting to the screw 42 the screwing and unscrewing motion imparted by the actuation means 60 without obstructing the axial movement of the second body 30 caused by the deformation of the resilient element 51.

The second transmission shaft 64 is internally hollow, with inner diameter greater than the outer diameter of the shank 422 of the screw 42 and is equipped with a pair of elongated and rectilinear slots 641 (only one of which is visible in the figures), which are arranged on the side surface thereof in diametrically opposite positions and are oriented with longitudinal axis parallel to the longitudinal axis A.

Preferably, the second transmission shaft 64 comprises two diametrically opposite slots 641.

The second transmission shaft 64 also comprises a pair of diametrically opposite through holes 642.

The actuation means 60 comprise a first pin 643, which is inserted into the holes 642 and into a through hole 631 formed in the first transmission shaft 63 and is adapted for fixing the second transmission shaft 64 to the first transmission shaft 63 without degrees of freedom.

The actuation means 60 also comprise a second pin 644, which is inserted in a hole 424 formed in the shank 422 and in the slots 641, arranged with longitudinal axis substantially perpendicular to the longitudinal axis of the slot 641 so as to generate a prismatic connection between the second transmission shaft 64 and the shank 422 of the screw 42.

The support foot 10 also comprises a device 70 for displaying the measurement carried out by the weighing device 50 that comprises a reference element 71 and a window 72, which is formed in the second body 30 and allows the reference element 71 to be viewed from the outside.

The reference element 71 consists of a washer arranged between the resilient element 51 and the shoulder 422 of the screw 42.

The window 72 can for example consist of a slit with an elongated shape having longitudinal axis substantially parallel to the longitudinal axis A.

The reference element 71 is movable with respect to the window 72 between a first position, in which the reference element is visible in the lower portion of the window 72 and the force acting on the support foot is minimum or zero, and a second position, in which the reference element is visible in the upper portion of the window 72 and the force acting on the support foot 10 is maximum.

The display device also comprises a graduated scale 73 able to be adjusted in position according to a direction parallel to the longitudinal axis A for adjusting the tare of the object that the support foot 1 is intended to support. The graduated scale 73 is fixed to the second body 30 and is arranged along the longitudinal development of the window 72.

Such a graduated scale 73 comprises a pair of slots 731 arranged with longitudinal axis parallel to the longitudinal axis A, adapted for allowing the translation of the graduated scale 73 along the longitudinal axis A to carry out the adjustment of the tare of the object that must be supported.

The presence of the slots 731 thus makes it possible to adjust the graduated scale 73 to carry out the zeroing of the tare so that it is possible to use the same support foot in different applications.

The window 72 can be blocked by a sheet of glass or other transparent material to prevent the entry of foreign bodies inside the second body 30 and at the same time allow the reference element to be viewed.

The operation of the support foot 10 according to the invention is as follows.

When the operator sets the crank 61 in rotation to extend or shorten the support foot 10, in order to raise or lower the object to be supported, the rotation of the crank 61 is transferred to the first transmission shaft 63 through the reducer 62.

The first transmission shaft 63 sets the second transmission shaft 64 in rotation, which in turn transmits the rotational motion to the screw 42 that, being screwed in or unscrewed with respect to the nut screw 41, changes the distance between the second body 30 and the support base 21.

When a force having direction parallel to the longitudinal axis A bears down on the support foot 20, the resilient element 51 is compressed and the second body 30, which is free to slide with respect to the first body 20 thanks to the sliding coupling between the second transmission shaft 64 and the shank 422, approaches the base 21.

With the approaching of the second body 30 to the base 21, the window 72, and therefore the graduated scale 73, also approaches the base 21, while the reference element remains fixed indicating the measurement of the weight force bearing down on the support foot 10 on the graduated scale 73. The invention thus conceived can undergo numerous modifications and variants, all of which are covered by the inventive concept.

In practice, the materials used, as well as the contingent shapes and sizes, can be whatever according to requirements without for this reason departing from the scope of protection of the following claims.

## Claims

1. An extensible support foot (10) comprising:
- a first body (20) equipped with a support base (21),
- a second body (30) slidingly associated with the first body (20) and movable along a predetermined longitudinal direction (A) towards or away from the support base (21),
- means (40) for adjusting the distance between the second body (30) and the support base (21), wherein the adjustment means (40) comprise a screw (42) rotatably associated with the second body (30) and configured to be screwed or unscrewed with respect to a nut screw (41) associated with the first body (20),
- a weighing device (50) adapted for measuring a force acting on the second body (30) in said longitudinal direction (A), and
- a device (70) for displaying the measurement carried out by the weighing device (50),
**characterised in that** said display device (70) comprises a reference element (71) associated with the screw (42) and a window (72) formed in the second body (30) to allow the reference element (71) to be viewed from the outside.

2. Support foot (10) according to claim 1, wherein the weighing device (50) comprises a resilient element (51) arranged between the first body (20) and the second body (30).

3. Support foot (10) according to claim 2, wherein the resilient element (51) is contained inside a cavity (31) of the second body (30).

4. Support foot (10) according to claims 2 or 3, wherein the resilient element (51) is a helical compression spring.

5. Support foot (10) according to claim 1, wherein the screw (42) is movable with respect to the second body (30) along said longitudinal direction (A).

6. Support foot (10) according to claims 2 and 5, wherein the resilient element (51) is arranged between said screw (42) and the second body (30).

7. Support foot (10) according to claim 1, wherein the reference element (71) comprises a washer arranged between the resilient element (51) and the screw (70).

8. Support foot (10) according to claim 1, **characterised in that** the second body (30) has a graduated scale (73) fixed to it, which is adjustable in position according to a direction parallel to the longitudinal direction (A), for adjusting the tare based on the application.

9. Waste compactor comprising: a loading area, a hopper adapted for defining an opening for the insertion of waste inside the loading area, and a press adapted for compressing the waste inside the loading area, said compactor being **characterised in that** it comprises a plurality of support feet (10) according to any one of the previous claims.

## Patentansprüche

1. Ausfahrbarer Stützfuß (10), umfassend:
- einen ersten Körper (20), der mit einer Stützbasis (21) ausgestattet ist,
- einen zweiten Körper (30), der gleitend mit dem ersten Körper (20) assoziiert ist und
entlang einer vorbestimmten Längsrichtung (A) zu oder weg von der Stützbasis (21) beweglich ist,
- Mittel (40) zum Einstellen des Abstands zwischen dem zweiten Körper (30) und der Stützbasis (21), wobei die Einstellmittel (40) eine Schraube (42) umfassen, die drehbar mit dem zweiten Körper (30) assoziiert und konfiguriert ist, um in Bezug auf eine Mutterschraube (41), die mit dem ersten Körper (20) assoziiert ist, ein- oder ausgeschraubt zu werden,
- eine Wiegevorrichtung (50), die zum Messen einer Kraft angepasst ist, die auf den zweiten Körper (30) in der Längsrichtung (A) wirkt, und
- eine Vorrichtung (70) zum Anzeigen der von der Wiegevorrichtung (50) durchgeführten Messung,
**dadurch gekennzeichnet, dass** die Anzeigevorrichtung (70) ein Referenzelement (71), das mit der Schraube (42) assoziiert ist, und ein Fenster (72), das in dem zweiten Körper (30) gebildet ist, umfasst, um zu ermöglichen, dass das Referenzelement (71) von außen gesehen werden kann.

2. Stützfuß (10) nach Anspruch 1, wobei die Wiegevorrichtung (50) ein elastisches Element (51) umfasst, das zwischen dem ersten Körper (20) und dem zweiten Körper (30) angeordnet ist.

3. Stützfuß (10) nach Anspruch 2, wobei das elastische Element (51) in einem Hohlraum (31) des zweiten Körpers (30) beinhaltet ist.

4. Stützfuß (10) nach Anspruch 2 oder 3, wobei das elastische Element (51) eine spiralförmige Druckfeder ist.

5. Stützfuß (10) nach Anspruch 1, wobei die Schraube (42) in Bezug auf den zweiten Körper (30) entlang der Längsrichtung (A) beweglich ist.

6. Stützfuß (10) nach den Ansprüchen 2 und 5, wobei das elastische Element (51) zwischen der Schraube (42) und dem zweiten Körper (30) angeordnet ist.

7. Stützfuß (10) nach Anspruch 1, wobei das Referenzelement (71) eine Unterlegscheibe umfasst, die zwischen dem elastischen Element (51) und der Schraube (70) angeordnet ist.

8. Stützfuß (10) nach Anspruch 1, **dadurch gekennzeichnet, dass** der zweite Körper (30) eine daran befestigte Skala (73) aufweist, deren Position gemäß einer parallelen Richtung zur Längsrichtung (A) verstellbar ist, um das Leergewicht beruhend auf der Anwendung einzustellen.

9. Abfallverdichter, umfassend: einen Ladebereich, einen Trichter, der geeignet ist, eine Öffnung für das Einführen von Abfall in den Ladebereich zu öffnen, und eine Presse, die angepasst ist, um den Abfall in dem Ladebereich zu verdichten, wobei der Verdichter **dadurch gekennzeichnet ist, dass** er eine Vielzahl von Stützfüßen (10) gemäß einem der vorherigen Ansprüche umfasst.

## Revendications

1. Pied de support extensible (10) comprenant :
- un premier corps (20) doté d'une base de support (21),
- un second corps (30) associé de manière coulissante au premier corps (20) et déplaçable le long d'une direction longitudinale (A) prédéterminée vers ou à partir de la base de support (21),
- des moyens (40) pour ajuster la distance entre le second corps (30) et la base de support (21), dans lequel les moyens d'ajustement (40) comprennent une vis (42) associée de manière rotative au second corps (30) et configurée de façon à être vissée ou dévissée par rapport à un écrou (41) associé au premier corps (20),
- un dispositif de pesage (50) conçu pour mesurer la force agissant sur le second corps (30) dans ladite direction longitudinale (A), et
- un dispositif (70) pour l'affichage de la mesure effectuée par le dispositif de pesage (50),
**caractérisé en ce que** ledit dispositif d'affichage (70) comprend un élément de référence (71) associé à la vis (42) et une fenêtre (72) formée dans le second corps (30) pour permettre à l'élément de référence (71) d'être vu depuis l'extérieur.

2. Pied de support (10) selon la revendication 1, dans lequel le dispositif de pesage (50) comprend un élément élastique (51) placé entre le premier corps (20) et le second corps (30).

3. Pied de support (10) selon la revendication 2, dans lequel l'élément élastique (51) est contenu dans une cavité (31) du second corps (30).

4. Pied de support (10) selon la revendication 2 ou 3, dans lequel l'élément élastique (51) est un ressort de compression hélicoïdal.

5. Pied de support (10) selon la revendication 1, dans lequel la vis (42) est déplaçable par rapport au second corps (30) le long de ladite direction longitudinale (A).

6. Pied de support (10) selon les revendications 2 et 5, dans lequel l'élément élastique (51) est placé entre ladite vis (42) et le second corps (30).

7. Pied de support (10) selon la revendication 1, dans lequel l'élément de référence (71) comprend une rondelle placée entre l'élément élastique (51) et la vis (70).

8. Pied de support (10) selon la revendication 1, **caractérisé en ce que** le second corps (30) a une échelle graduée (73) fixée sur lui, qui est réglable en position selon une direction parallèle à la direction longitudinale (A), pour régler la tare en fonction de l'application.

9. Compacteur de déchets comprenant : une zone de chargement, une trémie conçue pour définir une ouverture pour l'insertion de déchets à l'intérieur de la zone de chargement, et une presse conçue pour compresser les déchets à l'intérieur de la zone de chargement, ledit compacteur étant **caractérisé en ce qu'**il comprend une pluralité de pieds de support (10) selon l'une quelconque des revendications précédentes.
